# FASCICULE DE BREVET EUROPEEN

(11) **EP 1 489 489 B1**
(45) Date de publication et mention de la délivrance du brevet: **21.05.2008**
(21) Numéro de dépôt: 04300321.9
(22) Date de dépôt: 10.06.2004
(51) Int. Cl.: G06F 7/58, H03K 3/84

(54) **Circuit de contrôle d'aléa d'un générateur de nombres aléatoires**
Schaltung zum Überprüfen der Zufälligkeit eines Zufallszahlengenerators
Circuit for checking the randomness of a random number generator

(30) Priorité: 12.06.2003 FR 0307088
(43) Date de publication de la demande: 22.12.2004
(73) Titulaire: STMicroelectronics S.A., 92120 Montrouge (FR)
(72) Inventeur: Bardouillet, Michel, 13790 Rousset (FR); Orlando, William, 13790 Peynier (FR); Malherbe, Alexandre, 13530 Trets (FR); Anguille, Claude, 13320 Banc Bel Air (FR)
(74) Mandataire: de Beaumont, Michel

(56) Documents cités:
- US-A- 3 217 145
- US-A- 3 582 882
- J. PHILLIPS: "Algorithm AS 48. Uncertainty Function for a Binary Sequence" APPLIED STATISTICS, vol. 21, 1972, pages 97-99, XP0008029574 ROYAL STATISTICAL SOCIETY, LONDON, GB
- A. RUKHIN ET AL.: "A statistical test suite for random and pseudorandom number generators for cryptographic applications" 15 mai 2001 (2001-05-15), , XP002276676 Extrait de l'Internet: URL:http://csrc.nist.gov/rng/SP800-22b.pdf > [extrait le 2004-03-26] pages iv-x, 29-36, 46-49, 77, 78, 87-89

## Description

La présente invention concerne le domaine des générateurs aléatoires et plus précisément les générateurs de nombres aléatoires réalisés en circuit intégré.

La qualité d'un générateur aléatoire se mesure par la qualité de son aléa, c'est-à-dire l'équiprobabilité qu'a le générateur à délivrer n'importe quel nombre.

Aujourd'hui, les générateurs aléatoires sont, lors de leur conception, généralement testés sur un lot de caractérisation permettant de vérifier la qualité de l'aléa. Cette qualité d'aléa n'est toutefois pas testée pour chaque puce fabriquée. En fin de fabrication, on se contente généralement d'un test fonctionnel de la puce et non de fiabilité de l'aléa.

Les générateurs aléatoires sont souvent utilisés dans des applications de traitement algorithmique faisant intervenir des clés secrètes et notamment pour masquer la manipulation de ces clés secrètes par les algorithmes. La qualité de l'aléa est dans ce genre d'application fondamentale dans la mesure où cela conditionne la sécurité du processus de traitement des données.

De plus, les générateurs aléatoires, même s'ils fonctionnent correctement en sortie de fabrication, peuvent être sensibles à des dérives. En effet, comme toute fonction mise en oeuvre par un circuit intégré, le générateur aléatoire peut notamment être sensible à des différences thermiques qui sont alors susceptibles de conditionner la qualité de l'aléa.

Le document US-A-3582882 décrit un circuit tel que spécifié dans le préambule de la revendication indépendante 1.

Il serait donc souhaitable de pouvoir valider la qualité d'un aléa d'un générateur intégré dans une puce.

La présente invention vise à proposer un circuit intégré permettant de vérifier le caractère aléatoire de nombres fournis par un générateur aléatoire intégré.

L'invention vise également à donner une information en temps réel sur la qualité de l'aléa et permettre ainsi de détecter une éventuelle dérive en fonctionnement du générateur aléatoire.

La présente invention vise également à proposer une solution qui soit mise en oeuvre de façon matérielle et s'affranchir ainsi de la fragilité de solutions logicielles.

Pour atteindre ces objets et d'autres, la présente invention prévoit un circuit de contrôle du caractère aléatoire d'un flux de bits tel que défini dans la revendication indépendante 1, comportant:
un registre d'entrée à décalage recevant le flux de bits et dont les sorties sont exploitées en parallèle ;
au moins un élément de comparaison du contenu au moins partiel du registre d'entrée par rapport à des motifs prédéterminés ;
une pluralité de compteurs en nombre au plus égal au nombre de motifs prédéterminés, commandés en fonction du résultat de la comparaison ; et
un élément de détection du dépassement d'au moins un seuil par l'un des compteurs, le résultat de cette détection conditionnant l'état d'un mot ou bit indicateur du caractère aléatoire ou non du flux de bits.

Selon le mode de réalisation de la présente invention, lesdits compteurs sont préchargés à un compte médian, l'écart de chaque compteur par rapport au compte médian étant périodiquement divisé par un nombre entier afin de normaliser les écarts.

Selon un mode de réalisation de la présente invention, la période de normalisation des compteurs à la valeur médiane est supérieure à 2ⁿ⁻¹/f.h cycles de comparaison, où n désigne le nombre de bits du registre d'entrée, où f désigne le facteur de normalisation et où h désigne le pas d'incrément ou de décrément.

Selon un mode de réalisation de la présente invention, pour un registre d'entrée sur n bits, le nombre de motifs est au maximum de n.

Selon un mode de réalisation de la présente invention, l'occurrence d'un des motifs se traduit par une incrémentation du compteur correspondant d'une valeur 2ⁿ-1 et une décrémentation de tous les autres compteurs d'une unité.

Selon un mode de réalisation de la présente invention, le détecteur détecte un débordement d'un desdits compteurs.

Selon un mode de réalisation de la présente invention, le circuit est intégré sur la même puce que le générateur aléatoire qu'il est censé surveiller.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente de façon schématique et sous forme de blocs, un mode de réalisation d'un générateur aléatoire selon l'invention ;
la figure 2 représente, de façon schématique et sous forme de blocs, un mode de réalisation d'un circuit de vérification du caractère aléatoire d'un générateur de nombres aléatoires ; et
la figure 3 illustre une variante d'un circuit de vérification d'aléa selon l'invention.

Les mêmes éléments ont été désignés par les mêmes références aux différentes figures. Pour des raisons de clarté, seuls les éléments du circuit et du générateur qui sont nécessaires à la compréhension de l'invention ont été représentés aux figures et seront décrits par la suite.

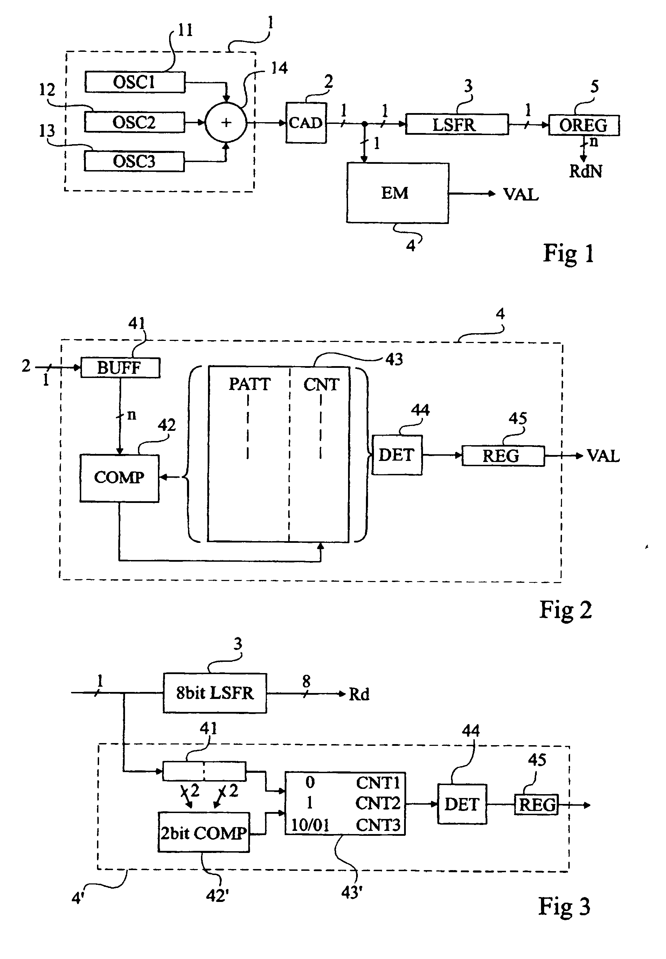

La figure 1 représente de façon très schématique un mode de réalisation d'un générateur aléatoire selon la présente invention.

Un tel générateur utilise, de façon classique, une source de bruit analogique 1 dont le résultat est converti en au moins un flux de bits par un convertisseur analogique-numérique 2 (CAD). Le flux de bits issu du convertisseur est ensuite traité, par exemple, par un registre à décalage à rétroaction linéaire (LSFR) dont la sortie fournit un flux de bits aléatoire Rd. Le recours à un tel registre à rétroaction linéaire constitue un exemple de constitution de générateur aléatoire pouvant être remplacé par n'importe quel autre système classique. Le plus souvent, le flux Rd est mis en forme sur plusieurs bits (par exemple, n) en fonction du nombre de bits des nombres aléatoires à générer. Par exemple, le flux Rd est alors envoyé en entrée d'un registre à décalage 5 (OREG) de sortie dont les n bits sont lus en parallèle pour fournir le nombre aléatoire RdN. En variante, le contenu du registre 3 est lu en parallèle.

Dans l'exemple représenté, on a supposé une source de bruit analogique 1 constituée de trois oscillateurs libres 11, 12 et 13 (OSC1, OSC2 et OSC3) dont les sorties respectives sont sommées (SOMMATEUR 14) pour fournir le bruit analogique en entrée du convertisseur 2.

Ce qui a été décrit ci-dessus correspond à la structure d'un générateur aléatoire classique en circuit intégré.

Selon la présente invention, le flux de bits issu du convertisseur 2 est en parallèle envoyé sur un circuit 4 (EM) de vérification du caractère aléatoire de ce flux. En variante non préférée, l'entrée du circuit 4 peut être placée en sortie du registre à décalage à rétroaction linéaire 3, sachant que le registre 3 améliore déjà la distribution statistique de l'aléa et risque donc de masquer des défauts propres à la source 1. Le circuit 4 fournit un mot ou bit VAL de validation du caractère aléatoire du flux de bits Rd.

La structure de générateur aléatoire exposée en relation avec la figure 1 n'est qu'un exemple. D'autres générateurs classiques pourront être utilisés et notamment d'autres sources de bruit analogique. Pour la mise en oeuvre de l'invention, on doit simplement disposer, en entrée du circuit 4, du flux de bits dont on souhaite vérifier le caractère aléatoire.

La figure 2 représente un mode de réalisation d'un circuit 4 de vérification du caractère aléatoire d'un flux de bits selon l'invention.

Ce circuit 4 comporte un registre d'entrée à décalage 41 (BUFF) sur n bits recevant le flux de bits issu du convertisseur 2.

La taille (nombre de bits) du registre 41 d'entrée du circuit 4 est au minimum d'un bit. La taille du registre 41 n'a pas en théorie de maximum. En pratique, on choisira de préférence un registre dont la taille est au maximum celle (n bits) du nombre aléatoire fourni par le générateur.

Selon l'invention, le contenu du registre 41 sur n bits est comparé par un circuit 42 (COMP) à des motifs (PATT) prédéterminés stockés dans une table 43 du circuit 4. De préférence, la table 43 est stockée en dur, c'est-à-dire que les motifs qui correspondent à des exemples de mots caractéristiques sur n bits permettant de vérifier le caractère aléatoire, sont stockés de façon non volatile.

La table 43 comporte, associé à chaque motif, un compteur CNT du nombre d'occurrences de ce motif. On dispose donc d'une banque de motifs et d'une banque de compteurs associés.

De façon périodique, le comparateur 42 compare le contenu du registre 41 aux motifs préenregistrés dans la table 43 et, à tout le moins et selon le mode de réalisation choisi, augmente ou diminue le compte du compteur associé au motif trouvé. L'examen du contenu des compteurs permet alors de vérifier le caractère aléatoire. En effet, si l'un des motifs revient trop souvent, cela veut dire que le générateur présente un défaut d'aléa. En prenant l'exemple d'un tirage aléatoire sur un bit, le nombre de 0 et de 1 doit être statistiquement égal.

Le circuit 4 comporte donc un détecteur 44 chargé de détecter un dépassement d'un des comptes CNT de la table 43 par rapport à un seuil déterminé. Un mode de réalisation préféré d'une telle détection sera exposé par la suite. Le détecteur 44 fournit son résultat à un registre de sortie 45 qui contient le mot ou, à titre simplifié, le bit de validation VAL du caractère aléatoire du train de bits fourni par le générateur.

On notera que plus le nombre n de bits est élevé, plus on contrôle les pseudopériodes qui engendrent des faiblesses dans le tirage aléatoire. Ainsi, de façon idéale, la table 43 contient, de façon exhaustive, tous les motifs PATT possibles. Par exemple, pour des registres huit bits, la table 43 contient 256 motifs.

Selon une variante de réalisation, on peut réduire le nombre de motifs dans la table 43 en regroupant les motifs similaires. Le nombre de compteurs est donc au plus égal au nombre de motifs à surveiller. Le caractère similaire d'un motif dépend de la période avec laquelle le contenu du registre 41 est comparé aux motifs de la table 43. Idéalement, le contenu du registre 41 est comparé à chaque nouveau bit arrivant. En prenant cet exemple, et pour un mot de 4 bits, compter les occurrences de mots 0101 est la même chose que compter les occurrences de mots 1010. Bien entendu, des pondérations peuvent alors être prévues si on souhaite garantir l'équiprobabilité. Ces pondérations différentes peuvent être remplacées par (ou combinées avec) des seuils différents pour les différents compteurs.

Le détecteur 44 correspond, dans une version simplifiée, à la détection des limites possibles des compteurs (débordements). Bien entendu, des seuils intermédiaires peuvent être prévus.

Selon le mode de réalisation de l'invention, le comptage est effectué à partir de compteurs préchargés à une valeur médiane ou moyenne lors de la mise en service. Par la suite, à chaque période de recherche d'un motif, le comparateur 42 augmente le compte du motif détecté d'une quantité 2ⁿ-1 et diminue le compte de tous les autres motifs d'une unité. Un tel mode de réalisation évite le remplissage des compteurs au fur et à mesure du fonctionnement du système. En fonctionnement normal avec un générateur correctement aléatoire, aucun compteur ne déborde, si on assiste à un débordement, c'est que le générateur n'est pas aléatoire. Toutefois, les compteurs doivent être suffisamment grands pour respecter le fait que le caractère aléatoire ne se vérifie que sur des grandes quantités de nombres.

Pour éviter le recours à des compteurs trop grands, on ramène de préférence périodiquement les comptes à la moyenne (valeur médiane) avec le même écart. On effectue en quelque sorte une normalisation par rapport à cette valeur médiane. Pour ce faire, on divise tous les écarts par rapport à la valeur moyenne (compte médian du compteur) par un nombre entier prédéterminé (par exemple, 2).

La figure 3 représente une variante de réalisation d'un circuit 4' de contrôle d'aléa pour lequel on ne souhaite détecter que des défauts dits de base du générateur aléatoire. Des défauts de base consistent, par exemple, à détecter une synchronisation des oscillateurs. Dans un tel cas, le train de bits fourni en sortie est une succession de 0 et de 1. Deux bits suffisent alors pour détecter le défaut d'aléa. Parmi les défauts dits de base, on peut aussi chercher à détecter les suites de 1 ou de 0 trop longues.

Selon ce mode de réalisation, on suppose un mot Rd sur 8 bits fourni par le registre 3 et un circuit 4' comprenant un registre d'entrée 41' sur 2 bits et un comparateur 42' de motifs de 2 bits chacun. La table 43' ne contient que quatre motifs à savoir 0, 1, 10 et 01, et trois compteurs CNT1 (pour les 0), CNT2 (pour les 1) et CNT3 (pour les 10 et 01). On utilise, par exemple, des compteurs sur 32 bits et le détecteur 44 sert à détecter un éventuel débordement de chaque compteur.

A chaque fois qu'un bit arrive sur le flux d'entrée et est stocké dans le registre 41', son bit de poids faible est comparé (par un comparateur non représenté ou par le compteur 42' selon sa constitution) aux deux premiers motifs (0 et 1) sur un bit de la table 43'.

A chaque fois qu'un 0 est détecté, le compteur CNT1 est incrémenté de 1, autrement il est remis à 0. Par conséquent, un débordement du compteur CNT1 détecte un flux de 32 bits à 0 que l'on considère comme représentant un défaut d'aléa.

A chaque fois qu'un 1 est détecté, le compteur CNT2 est incrémenté de 1, autrement, il est réinitialisé (remis à zéro). De la même façon, le détecteur 44 détecte un débordement du compteur CNT2 par exemple sur 32 bits qui indique un flux de 32 états 1 consécutifs.

Le comparateur 42' sert, dans ce mode de réalisation, à comparer le motif des deux bits du registre 41' aux motifs 10 et 01. En cas d'identité, le compteur CNT3 est incrémenté. Puis, lors de la période suivante où le registre 41' est rempli par décalage, on compare le bit introduit avec le bit précédent (bit de droite). Si les bits sont identiques, le compteur CNT3 est remis à zéro. Par conséquent, quand les motifs 11 ou 00 arrivent, suite à des motifs 10 ou 01, le compteur CNT3 est réinitialisé.

Un tel mode de réalisation permet de détecter sur une occurrence de 32 bits les quatre motifs de base avec seulement trois compteurs sur 5 bits.

A titre de variante, on peut se contenter de deux registres et de deux compteurs (CNT1 et CNT2 de la figure 3) en ne tenant compte que d'un bit sur deux et en réinitialisant les compteurs à chaque doublon consécutif.

Le séquencement d'un circuit 4 ou 4' de vérification d'aléa selon l'invention est à la portée de l'homme du métier à partir des indications fonctionnelles données ci-dessus et de l'application.

De même, les seuils à partir desquels on considère que le flux de bits n'est plus équiprobable sont déterminés, de préférence, en effectuant un compromis entre la fiabilité recherchée et la taille des compteurs.

Dans le mode de réalisation préféré de l'invention, la taille des compteurs conditionne la périodicité de la normalisation autour de la valeur moyenne.

La période de normalisation est au moins supérieure à 2ⁿ⁻¹/f.h cycles de comparaison, où f désigne le facteur de normalisation (facteur de division des écarts à la médiane) et où h désigne le pas d'incrément ou de décrément. On applique cette relation séparément aux pas d'incrément et de décrément et on choisit la période calculée la plus grande (cas le plus contraignant).

Selon une variante de réalisation où les seuils ne correspondent pas aux débordements des compteurs, on peut suivre l'évolution dans le temps d'une perte du caractère aléatoire du générateur, par exemple en mémorisant et en exploitant les durées de dépassement de seuils avant retour dans la plage acceptable. Un débordement peut alors constituer un seuil critique. D'autres seuils intermédiaires peuvent être prévus.

Un avantage de l'invention est qu'elle permet de suivre, en temps réel, la qualité d'un aléa fourni par un générateur de nombres aléatoires.

Un autre avantage de l'invention est qu'elle permet de détecter d'éventuels attaques sur les générateurs aléatoires de circuit intégré. En effet, certaines attaques peuvent consister en une déformation de l'aléa pour être capable de pirater l'algorithme ou les données secrètes censées être masqués par les nombres aléatoires. L'utilisation d'un circuit tel que prévu par l'invention permet de détecter la perte de l'aléa quelle qu'en soit la cause (dérive, attaque, etc.).

Bien entendu, la présente invention est susceptible de diverses variantes et modifications qui apparaîtront à l'homme de l'art. En particulier, si la réalisation logique câblée de la table de motifs constitue un mode de réalisation préféré, on pourra également recourir à tout moyen classique de mémorisation volatile ou non.

De plus, l'exploitation faite par le bit ou le mot de validation du générateur aléatoire dépend de l'application. Il pourra s'agir, par exemple, de bloquer le système en cas de défaut d'aléa ou d'enclencher une procédure d'alerte adaptée.

## Revendications

1. Circuit (4) de contrôle du caractère aléatoire d'un flux de bits comprenant
un registre d'entrée (41, 41') à décalage recevant le flux de bits et dont les sorties sont exploitées en parallèle ;
**caractérisé en ce qu'**il comporte :
au moins un élément de comparaison (42, 42') du contenu au moins partiel du registre d'entrée par rapport à des motifs prédéterminés (PATT) ;
une pluralité de compteurs (CNT) en nombre au plus égal au nombre de motifs prédéterminés, commandés en fonction du résultat de la comparaison ; et
un élément de détection (44) du dépassement d'au moins un seuil par l'un des compteurs, le résultat de cette détection conditionnant l'état d'un mot ou bit (VAL) indicateur du caractère aléatoire ou non du flux de bits, lesdits compteurs (CNT) étant préchargés à un compte médian, l'écart de chaque compteur par rapport au compte médian étant périodiquement divisé par un nombre entier afin de normaliser les écarts.

2. Circuit selon la revendication 1, dans lequel la période de normalisation des compteurs (CNT) à la valeur médiane est supérieure à 2ⁿ⁻¹/f.h cycles de comparaison, où n désigne le nombre de bits du registre d'entrée, où f désigne le facteur de normalisation et où h désigne le pas d'incrément ou de décrément.

3. Circuit selon la revendication 1 ou 2, dans lequel pour un registre d'entrée (41) sur n bits, le nombre de motifs (PATT) est au maximum de n.

4. Circuit selon la revendication 3, dans lequel l'occurrence d'un des motifs (PATT) se traduit par une incrémentation du compteur (CNT) correspondant d'une valeur 2ⁿ-1 et une décrémentation de tous les autres compteurs d'une unité.

5. Circuit selon l'une quelconque des revendications 1 à 4, dans lequel le détecteur (44) détecte un débordement d'un desdits compteurs.

6. Circuit selon l'une quelconque des revendications 1 à 5, intégré sur la même puce que le générateur aléatoire qu'il est censé surveiller.

## Claims

1. A circuit (4) for controlling the random character of a bit flow, comprising:
an input shift register (41, 41') receiving the bit flow, having its outputs exploited in parallel;
**characterized in that** it comprises:
at least one element (42, 42') for comparing at least a partial content of the input register with predetermined patterns (PATT);
a plurality of counters (CNT) in a number at most equal to the number of predetermined patterns, controlled according to the comparison result; and
an element (44) for detecting the exceeding of at least one threshold by one of the counters, the result of this detection conditioning the state of a word or bit (VAL) indicative of the random or non-random character of the bit flow, said counters (CNT) being preloaded to a median count, the difference of each counter with the median count being periodically divided by an integer to normalize the differences.

2. The circuit of claim 1, wherein the period of normalization of the counters (CNT) to the median value is greater than 2ⁿ⁻¹/f.h comparison cycles, where n designates the number of bits of the input register, where f designates the normalization factor, and where h designates the increment or decrement step.

3. The circuit of claim 1 or 2, wherein for an input register (41) over n bits, the number of patterns (PATT) is at most n.

4. The circuit of claim 3, wherein the occurrence of one of the patterns (PATT) translates as an incrementation of the corresponding counter (CNT) by a value 2ⁿ-1 and a decrementation of all the other counters by one unit.

5. The circuit of any of claims 1 to 4, wherein said element for detecting (44) detects a overflow of one of said counters.

6. The circuit of any of claims 1 to 5, integrated on the same chip as the random generator that it aims at monitoring.

## Patentansprüche

1. Ein Schaltkreis (4) zum Steuern des zufälligen Charakters eines Bit-Flusses, wobei der Schaltkreis das Folgende aufweist:
Ein Eingabeschieberegister (41, 41'), das den Bit-Fluss empfängt, wobei seine Ausgänge parallel betrieben werden;
**dadurch gekennzeichnet, dass** er Folgendes aufweist:
wenigstens ein Element (42, 42') zum Vergleichen von wenigstens einem Teilinhalt des Eingaberegisters mit vorbestimmten Mustern (PATT);
eine Vielzahl von Zählern (CNT) in einer Anzahl höchstens gleich der Anzahl der vorbestimmten Muster, gesteuert gemäß dem Vergleichsergebnis, und
ein Element (44) zum Detektieren des Überschreitens wenigstens einer Schwelle durch einen der Zähler, wobei das Ergebnis dieser Detektion den Zustand eines Wortes oder Bits (VAL) bedingt, und zwar als Anzeige des zufälligen oder nicht-zufälligen Charakters des Bit-Flusses, wobei die Zähler (CNT) mit einem Mittelwert vorgeladen sind, wobei die Differenz jedes Zählers mit dem Mittelwert periodisch durch eine ganze Zahl geteilt wird, um die Differenzen zu normalisieren.

2. Der Schaltkreis nach Anspruch 1, wobei die Periode der Normalisierung der Zähler (CNT) auf den Mittelwert größer als 2ⁿ⁻¹/f.h Vergleichszyklen ist, wobei n die Anzahl der Bits des Eingaberegisters bezeichnet, wobei f den Normalisierungsfaktor bezeichnet und wobei h den Erhöhungs- oder Verminderungsschritt bezeichnet.

3. Der Schaltkreis nach Anspruch 1 oder 2, wobei für ein Eingaberegister (41) über n-Bits, die Anzahl der Muster (PATT) höchstens n ist.

4. Der Schaltkreis nach Anspruch 3, wobei das Auftreten von einem der Muster (PATT) als eine Erhöhung des entsprechenden Zählers (CNT) um einen Wert von 2ⁿ -1 und eine Verminderung von allen anderen Zählern durch eine Einheit übersetzt wird.

5. Der Schaltkreis nach einem der Ansprüche 1 bis 4 , wobei das Element zum Detektieren (44) einen Überlauf von einem der Zähler detektiert.

6. Der Schaltkreis nach einem der Ansprüche 1 bis 5, wobei der Schaltkreis auf dem gleichen Chip wie der Zufallsgenerator, den er überwacht, integriert ist.
